# EUROPÄISCHE PATENTANMELDUNG

(11) **EP 1 967 776 A2**
(43) Veröffentlichungstag der Anmeldung: **10.09.2008**
(21) Anmeldenummer: 08003092.7
(22) Anmeldetag: 20.02.2008
(51) Int. Cl.: F16K 21/12

(54) **Selbstschlussarmatur für sanitäre Anlagen oder dergleichen**

(30) Priorität: 06.03.2007 DE 102007011199
(71) Anmelder: NIRO-PLAN AG, 4663 Aarburg (CH)
(72) Erfinder: Sandt, Burkhard, Dipl.-Ing. für Maschinenbau, 13467 Berlin (DE); Kittel, Andreas, Ing. für Maschinenbau, 14513 Teltow (DE)
(74) Vertreter: Blumenröhr, Dietrich

(57) **Zusammenfassung**

Die Erfindung betrifft eine Selbstschlussarmatur für sanitäre Anlagen oder dergleichen mit einem Betätigungsglied für den Benutzer, mit einem Hilfsventil (9), das mit dem Betätigungsglied zusammenwirkt und eine hydraulisch über eine Entleerungsöffnung (27) entleerbare Gegendruckkammer (20) aufweist, und mit einem über die Gegendruckkammer betätigbaren Hauptventil, wobei die Entleerungsöffnung zumindest mittelbar durch ein Verschlusselement (24,25) des Hilfsventils verschließbar ist, wobei das Verschlusselement des Hilfsventils durch ein Vorspannmittel (31) in Schließstellung vorgespannt ist und wobei das Verschlusselement des Hilfsventils durch das Betätigungsglied aus der Schließstellung bringbar ist. Das Verschlusselement (24,25) des Hilfsventils (9) und das Betätigungsglied sind hierbei relativ zueinander bewegbar angeordnet und das Vorspannmittel (31) ist zwischen dem Verschlusselement des Hilfsventils und dem Betätigungsglied wirkend angeordnet, so dass sich das Verschlusselement selbst bei betätigt gehaltenem Betätigungsglied wieder in die Schließstellung bewegt.

## Beschreibung

Die Erfindung betrifft eine Selbstschlussarmatur für sanitäre Anlagen oder dergleichen mit einem Betätigungsglied für den Benutzer, mit einem Hilfsventil, das mit dem Betätigungsglied zusammenwirkt und eine hydraulisch über eine Entleerungsöffnung entleerbare Gegendruckkammer aufweist, und mit einem über die Gegendruckkammer betätigbaren Hauptventil, wobei die Entleerungsöffnung zumindest mittelbar durch ein Verschlusselement des Hilfsventils verschließbar ist, wobei das Verschlusselement des Hilfsventils durch ein Vorspannmittel in Schließstellung vorgespannt ist und wobei das Verschlusselement des Hilfsventils durch das Betätigungsglied aus der Schließstellung bringbar ist.

Derartige Selbstschlussarmaturen sind seit langem bekannt - so z. B. aus der DE-U-83 17 032 - und finden als Druckspüler zum Spülen von Klosett- und Urinalanlagen, aber auch als Wasch- und Brausearmaturen weite Verwendung. Bei derartigen bekannten selbst schließenden Armaturen wird nach Betätigung eines Betätigungsgliedes vom Wasserzulauf zum Wasserablauf über ein Ventil eine bestimmte Wassermenge abgegeben, wobei das Ventil ohne weitere Betätigung des Betätigungsgliedes nach einer bestimmten Zeit und damit nach Durchfluss einer bestimmten Wassermenge selbsttätig wieder schließt. Diese selbst schließenden Armaturen sind von Vorteil, da sie durch die Vorgabe bestimmter Wassermengen wassersparend sind, indem ein Schließen der Armatur von Hand nach erfolgter Wasserentnahme entfällt, vielmehr das Schließen ohne weitere Einwirkung des Benutzers selbsttätig erfolgt, indem das Verschlusselement durch ein Vorspannmittel in Schließstellung vorgespannt ist und somit nach dem Betätigen des Betätigungsglieds und dem damit verbundenen Öffnen des Hilfsventils durch das Vorspannmittel wieder automatisch in die Schließstellung bewegt wird.

Ein Hauptanwendungsgebiet für die genannten Selbstschlussarmaturen sind öffentliche sanitäre Anlagen, die wegen des Fehlens von Überwachungsmöglichkeiten häufig Beschädigung- und Manipulationsversuchen ausgesetzt sind. Ein solcher Manipulationsversuch besteht beispielsweise darin, das Betätigungsglied in einem betätigt gehaltenen Zustand dauerhaft festzulegen, wodurch die Selbstschlussfunktion der Armatur überbrückt bzw. außer Kraft gesetzt wird. Die Folge ist zwar nicht zwangsläufig eine Beschädigung der Selbstschlussarmatur, jedoch zumindest ein ungewünschter überhöhter Wasserverbrauch solange, bis die Manipulation des Betätigungsglieds bemerkt wird.

Von diesem Stand der Technik ausgehend liegt der vorliegenden Erfindung die Aufgabe zugrunde, eine Selbstschlussarmatur der eingangs genannten Art zur Verfügung zu stellen, die sich dadurch auszeichnet, dass sie sicher eine durch eine Manipulation der Selbstschlussarmatur verursachte dauerhafte Wasserentnahme verhindert.

Diese Aufgabe wird bei einer Selbstschlussarmatur der eingangs genannten Art dadurch gelöst, dass das Verschlusselement des Hilfsventils und das Betätigungsglied relativ zueinander bewegbar angeordnet sind und dass das Vorspannmittel zwischen dem Verschlusselement des Hilfsventils und dem Betätigungsglied wirkend angeordnet ist und so das Verschlusselement selbst bei betätigt gehaltenem Betätigungsglied wieder in die Schließstellung bewegt.

Hierbei lässt sich zwar das Verschlusselement des Hilfsventils durch das Betätigungsglied aus der Schließstellung bewegen, es bewegt sich aber aufgrund der Wirkung des Vorspannmittels anschließend selbsttätig wieder in die Schließstellung zurück und zwar selbst dann, wenn das Betätigungsglied noch in betätigtem Zustand ist. Hierdurch lässt sich sicherstellen, dass die Selbstschlussarmatur unabhängig vom Zustand des Betätigungsglieds selbsttätig nach einer voreingestellten Wasserentnahmezeit wieder schließt, wobei das Voreinstellen durch geeignete Auswahl des Vorspannmittels erfolgt.

In der Regel besteht das Vorspannmittel aus einem insbesondere in Axialrichtung wirkenden (Druck-)Federelement, wobei das Verschlusselement des Hilfsventils einerseits der Wirkung des Vorspannmittels und andererseits den jeweiligen vorherrschenden Wasserdrücken ausgesetzt ist. Dadurch ist im "Trockenzustand", also ohne Anschluss der Selbstschlussarmatur an den Wasserzu- bzw. -ablauf, die Schließbewegung des Verschlusselements des Hilfsventils aufgrund der Wirkung des Vorspannmittels unterschiedlich von der Schließbewegung, wenn die Selbstschlussarmatur an die Wasserleitung angeschlossen und mit Wasser gefüllt ist.

Damit die Wasserentnahmedauer besser einstellbar ist und da das Vorspannmittel nicht nur das Verschlusselement langsam in die Schließstellung bewegen muss (wobei die Bewegungsdauer die Entnahmedauer beeinflusst), sondern auch in der Schließstellung sicher festlegen muss, empfiehlt es sich insbesondere, wenn zusätzlich zum Vorspannmittel ein Verzögerungsglied zum verzögerten Schließen des Hilfsventils vorgesehen ist, das zum Vorspannmittel parallel geschaltet ist. Hierdurch lässt sich das Vorspannmittel stärker dimensionieren und damit das Verschlusselement sicherer in der Schließstellung halten, ohne dass damit auch die Schließbewegung zu schnell erfolgt und dadurch die Entnahmedauer zu kurz wäre; denn das Verzögerungsglied sorgt für eine dem Vorspannmittel entgegenwirkende sich langsam reduzierende Kraft, die in der Schließstellung des Vorspannmittels in der Regel auf 0 reduziert ist, so dass dann in der Schließstellung das Vorspannmittel alleine in vollem Umfang wirksam ist.

Ein solches Verzögerungsglied kann beispielsweise aus einer zweiten Gegendruckkammer bestehen mit einer Befüllungsöffnung mit reduziertem voreinstellbarem Öffnungsquerschnitt. Ist dann die Befüllungsöffnung einem die zweite Gegendruckkammer aufweisenden teleskopierbaren Kolben zugeordnet und ist durch das Bewegen des Kolbens insbesondere in Axialrichtung das Volumen der zweiten Gegendruckkammer veränderbar, so kann die Befüllungsöffnung beim Bewegen des Kolbens für ein verlangsamtes Befüllen bzw. Leeren der zweiten Gegendruckkammer sorgen und so die Bewegung des Kolbens bremsen. Dies lässt sich bei entsprechender Kopplung mit dem Hilfsventil und Parallelschaltung mit dem Vorspannmittel dazu ausnutzen, dass die Schließbewegung des Verschlusselements des Hilfsventils entsprechend gebremst erfolgt; wenn dann das Hilfsventil in der Schließstellung angekommen ist, ist soviel Wasser durch die Befüllungsöffnung aus der zweiten Gegendruckkammer heraus bzw. in die zweite Gegendruckkammer hinein geflossen, wie es dem Wasserdruck außerhalb der zweiten Gegendruckkammer entspricht; und dadurch übt die zweite Gegendruckkammer keine Kraft mehr auf das Hilfsventil aus und wirkt damit auch nicht mehr entgegen der Wirkung des Vorspannmittels.

Anstelle eines teleskopierbaren Kolbens kann die zweite Gegendruckkammer auch beispielsweise ein vorgegebenes unveränderliches Volumen aufweisen, jedoch eine in der zweiten Gegendruckkammer angeordnete und die zweite Gegendruckkammer in zwei Teilbereiche unterteilende Membran aufweisen, wobei dieser Membran die genannte Befüllungsöffnung zugeordnet sein kann, so dass durch das Bewegen der Membran die Größenverhältnisse der beiden Teilbereiche veränderbar ist und die Befüllungsöffnung für den entsprechenden gebremsten Wasseraustausch sorgt. Auch hier ist es so, dass dann, wenn das Verschlusselement des Hilfsventils die Schließstellung erreicht hat, die Membran ihre Endposition in der zweiten Gegendruckkammer erreicht hat und der Wasserdruck in beiden Teilbereichen gleich groß ist, so dass dem Vorspannmittel durch die zweite Gegendruckkammer keine Kraft mehr entgegenwirkt.

Anstelle eines Vorspannmittels mit parallel geschaltetem Verzögerungsglied ist es auch möglich, dass das Vorspannmittel selbst für eine verzögerte Schließbewegung sorgt. Hierzu kann es aus einem dauerelastischen Material bestehen, insbesondere einem Elastomer, einem Silikon oder dergleichen. Dieses Vorspannmittel, das auch selbst als Verschlusselement fungieren kann, kann dann das Verschlusselement des Hilfsventils über eine verzögerte Längenänderung oder Querschnittsänderung in die Schließstellung bewegen, wobei die Schließbewegung einerseits und die Anpresskraft des Verschlusselements in der Schließstellung andererseits von den Rückstelleigenschaften des Materials abhängt.

Wesentlich an den verschiedenen Arten der Vorspannmittel bzw. Verzögerungsglieder ist es, dass das Verschlusselement des Hilfsventils und das Betätigungsglied in Schließrichtung voneinander entkoppelbar und in Öffnungsrichtung aneinander gekoppelt sind. Hierzu kann beispielsweise das Betätigungsglied fest mit einer Basis des Hilfsventils verbunden sein und das Verschlusselement des Hilfsventils kann dann relativ zur Basis des Hilfsventils bewegbar sein. Hierdurch führt das Betätigen zu einem Verschieben des vollständigen Hilfsventils zusammen mit dem Verschlusselement aus der Schließstellung hinaus in die geöffnete Stellung, wobei dann anschließend das jeweilige Vorspannmittel dafür sorgt, dass das Verschlusselement auch dann gleich wieder in die Schließstellung bewegt wird, wenn das Betätigungsglied immer noch gedrückt gehalten ist. Wenn auf der anderen Seite das Betätigungsglied losgelassen wird, kehrt das gesamte Hilfsventil wieder in die Schließstellung zurück.

Dieses Zurückkehren des Betätigungsglieds in die Ausgangsstellung wird vor allem dadurch unterstützt, dass das Betätigungsglied von einem zweiten Vorspannmittel beaufschlagt ist und dieses zweite Vorspannmittel zwischen Betätigungsmittel und einem das Hauptventil und das Hilfsventil gemeinsam haltenden Gehäuse wirkend angeordnet ist. Dies entspricht dem üblichen Aufbau der eingangs genannten bekannten Selbstschlussarmaturen.

Weitere Merkmale und Vorteile der vorliegenden Erfindung ergeben sich aus den Unteransprüchen und der nachfolgenden Beschreibung verschiedener Ausführungsbeispiele; hierbei zeigen
- Figur 1: eine erfindungsgemäße selbst schließende Armatur in geschnittener Seitenansicht;
- Figur 2: ein erstes Ausführungsbeispiel einer Selbstschlussarmatur sowie Details der Armatur in Ruhephase (Figur 2a), in Öffnungsphase (Figur 2b) und in Schließphase (Figur 2c);
- Figur 3: ein zweites Ausführungsbeispiel einer Selbstschlussarmatur sowie Details der Armatur in Ruhephase (Figur 3a), in Öffnungsphase (Figur 3b) und in Schließphase (Figur 3c);
- Figur 4: ein drittes Ausführungsbeispiel einer Selbstschlussarmatur sowie Details der Armatur in Ruhephase (Figur 4a), in Öffnungsphase (Figur 4b) und in Schließphase (Figur 4c);
- Figur 5: ein viertes Ausführungsbeispiel einer Selbstschlussarmatur; und
- Figur 6: ein fünftes Ausführungsbeispiel einer Selbstschlussarmatur.

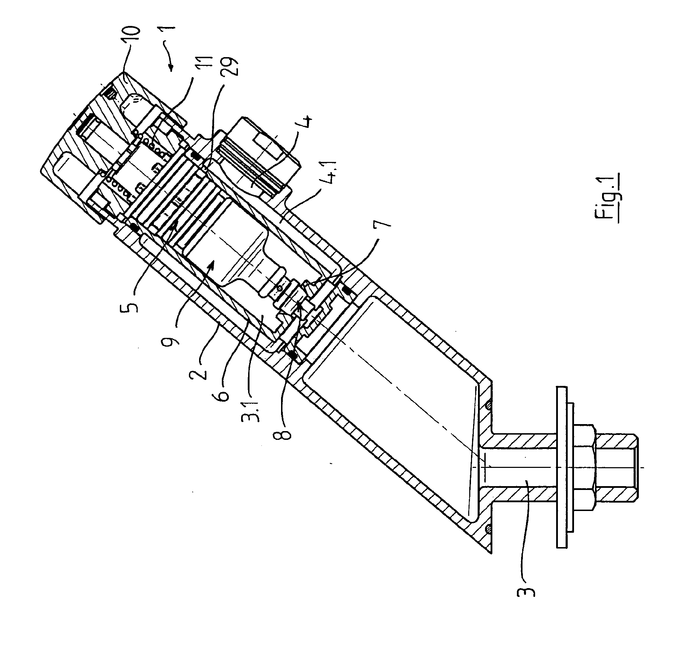

In Figur 1 ist eine erfindungsgemäße Selbstschlussarmatur 1 dargestellt mit einem Gehäuse 2, einem Wasserzulauf 3 und einem Wasserablauf 4. Das Armaturengehäuse 2 ist hohlzylindrisch ausgebildet und trägt auf seiner Innenseite eine Selbstschlusskartusche 5 mit einem Innengehäuse 6, das einen dem Wasserzulauf 3 zugeordneten Strömungsraum 3.1 aufweist, welcher durch einen Ventilsitz 7 von einem zwischen Gehäuse 2 und Innengehäuse 6 gebildeten, dem Wasserablauf 4 zugeordneten ringförmigen Strömungsraum 4.1 getrennt ist. Der Ventilsitz 7 ist einem so genannten Hauptventil 8 zugeordnet, während ein für die Funktion der Selbstschlussarmatur 1 wesentliches Hilfsventil 9 in der teilgeschnittenen Ansicht von Figur 1 nicht erkennbar ist.

Die Selbstschlussarmatur 1 weist an ihrem oberen Ende ein Betätigungsglied 10 in Form einer Kappe auf, bei deren Betätigen man das Hilfsventil 9 öffnet, was wiederum zum Öffnen des Hauptventils 8 führt, wodurch der Wasserfluss vom Wasserzulauf 3 zum Wasserablauf 4 ermöglicht wird. Ein zweites Vorspannmittel 11 in Form einer Feder ist zwischen Betätigungsglied 10 und Selbstschlusskartusche 5, die fest mit dem Gehäuse 2 verbunden ist, angeordnet, wirkt somit zwischen Betätigungsglied 10 und Gehäuse 2 und drückt hierdurch das Betätigungsglied 10 in die nicht betätigte obere Ausgangsstellung, wodurch ein Betätigen durch Überwindung der Federkraft des zweiten Vorspannmittels erfolgen muss.

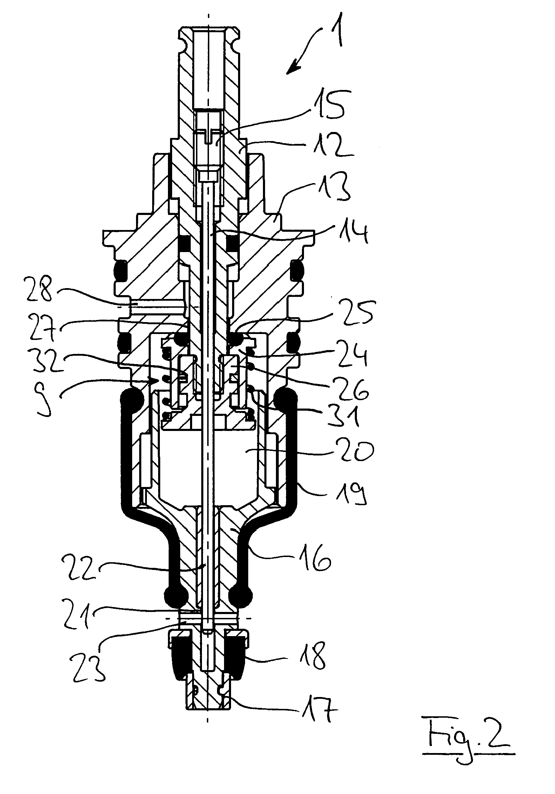

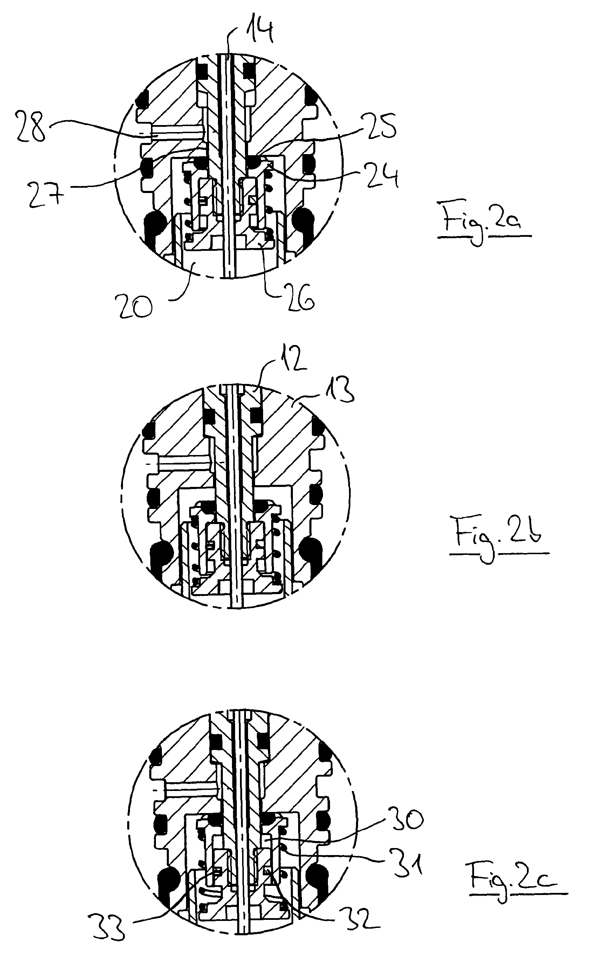

Der in Figur 1 dargestellte Aufbau entspricht auch den herkömmlichen Selbstschlussarmaturen des Standes der Technik, wobei also auch dort zweite Vorspannmittel zwischen Betätigungsglied und Gehäuse angeordnet sind, die dafür sorgen, dass das Betätigungsglied nach dem Betätigen wieder in die obere Ausgangsstellung zurückkehren, wodurch dann die Selbstschlussarmatur durch geeignetes Zusammenwirken von Hauptventil und Hilfsventil und zwischengeschalteter (in Figur 1 ebenfalls nicht dargestellter) Gegendruckkammer 12 (siehe Figur 2) dafür sorgt, dass der Wasserfluss nach einer voreingestellten Zeit wieder unterbrochen wird. Im Gegensatz dazu ist jedoch die erfindungsgemäße Selbstschlussarmatur in der Lage, selbst bei betätigt gehaltenem Betätigungsglied 10 den Wasserfluss nach einer voreingestellten Zeit zu unterbrechen, was aus der nachfolgenden Beschreibung der Zeichnungen verdeutlicht wird.

Figur 2 zeigt das "Innenleben" eines ersten Ausführungsbeispiels 1 einer Selbstschlussarmatur, wobei aus Übersichtlichkeitsgründen das Innengehäuse 6 ebenso weggelassen ist, wie das Betätigungsglied 10, das Außengehäuse 2 und der Wasserzulauf 3, der Wasserablauf 4 sowie der Strömungsraum 3.1 und der Strömungsraum 4.1. Auch für die nachfolgenden anderen Ausführungsbeispiele gilt Entsprechendes: Die genannten in Figur 2 nicht dargestellten Bauteile entsprechen denjenigen aus Figur 1 und sind aus Übersichtlichkeitsgründen in den nachfolgenden Figuren weggelassen.

In Figur 2 ist am oberen Ende der Selbstschlussarmatur 1 ein Kappenführungsteil 12 vorgesehen, das das in Figur 2 nicht dargestellte Betätigungsglied 10 (das in Form einer Kappe ausgebildet ist) trägt. Das Kappenführungsteil 12 ist in einem Kopfstück 13 axial verschieblich angeordnet und trägt wiederum auf seiner Innenseite eine Reguliernadel 14 mit einer endständigen Regulierschraube 15, wobei durch die Regulierschraube 15 einstellbar ist, wie weit sich die Reguliernadel 14 gegenüber dem Kappenführungsteil nach unten in einen Hauptventilkörper 16 erstreckt, der eine axiale Bohrung 21 zur Aufnahme der Reguliernadel 14 aufweist sowie eine endständige Sacklochbohrung 21 a, gegen die das untere Ende der Reguliernadel stößt. Durch die Position der Reguliernadel 14 wird der Hub vorgegeben beim Betätigen des Betätigungsglieds 10.

Der Ventilkörper 16 des Hauptventils 8 trägt an seinem unteren Ende eine Hauptventildichtung 18, die mit dem in Figur 1 dargestellten Ventilsitz 7 zusammenwirkt. Die Hauptventildichtung 18 ist durch ein endständig am Hauptventilkörper 16 festgelegtes Schraubelement 17 gehalten.

Das Kopfstück 13 weist einen das nachfolgend näher beschriebene Hilfsventil 9 umgreifenden zylindrischen Ansatz auf, der einen Hohlraum bildet. An dem Ansatz des Kopfstücks 13 ist eine hülsenförmige flexible Gummimembran 19 befestigt, die mit ihrem anderen Ende mit dem Ventilkörper 16 verbunden ist, der seinerseits in den durch das Kopfstück gebildeten Hohlraum eingreift. Zwischen Hohlraum im Kopfstück 13, Ventilkörper 16 und Gummimembran 19 ist eine Gegendruckkammer 20 gebildet, die für die Kommunikation zwischen Hauptventil und Hilfsventil sorgt. In dem Ventilkörper 16 ist eine axiale Bohrung 21 vorgesehen, über die die Verbindung zum Innenraum der Gegendruckkammer gegeben ist. Die Reguliernadel 14 wird durch die Gegendruckkammer 20 hindurch und in der Bohrung 21 geführt. Zwischen der Wandung der Bohrung 21 und der Reguliernadel 14 wird ein kleiner Ringraum 22 gebildet. Über zwei in Radialrichtung verlaufende Bohrungen 23 im Ventilkörper 16 steht der Ringraum 22 und damit die Gegendruckkammer 20 in Flüssigkeitsverbindung mit dem Strömungsraum 3.1 (siehe Figur 1) des Wasserzulaufs 3.

Am oberen Ende der Gegendruckkammer 20 ist das Hilfsventil 9 dargestellt: Das Hilfsventil 9 ist gebildet aus einer Hilfsventilbuchse 24 und einer Hilfsventildichtung 25, die zusammen ein Verschlusselement bilden, sowie aus einer Hilfsventilbasis 26, die am Kappenführungsteil 12 über eine Gewindeverbindung festgelegt ist. Innerhalb der Hilfsventilbasis 26 ist die Reguliernadel 14 geführt.

Die Hilfsventildichtung 25 und die ihr zugeordnete Hilfsventilbuchse 24, die zusammen das Verschlusselement bilden, verschließen eine ringförmige Entleerungsöffnung 27, die zwischen Kopfstück 13 und Kappenführungsteil 12 gebildet ist und über eine radiale Entleerungsbohrung 28 im Kopfstück 13 sowie eine Öffnung 29 im inneren Gehäuse 6 (siehe Figur 1) mit dem Strömungsraum 4.1 des Wasserauslasses 4 verbunden ist.

Die Funktion des Hilfsventils wird insbesondere aus den Figuren 2a, 2b und 2c ersichtlich. Dort erkennt man in Figur 2c eine zweite Gegendruckkammer 30, die als Verzögerungsglied fungiert. Dieses Verzögerungsglied ist einem Vorspannmittel 31 parallel geschaltet, welches zwischen der Hilfsventilbasis 26 und der Hilfsventilbuchse 24 angeordnet ist und beide Teile relativ zueinander in Axialrichtung verschiebt, indem es als Druckfeder ausgebildet ist. Wird nun die Hilfsventilbasis 26 von dem Kappenführungsteil 12 bei Betätigung des Betätigungsglieds 10 in der Gegendruckkammer 20 nach unten geschoben, so sorgt die Druckfeder 31 dafür, dass die zunächst mit der Hilfsventilbasis 26 mitbewegte Hilfsventilbuchse 24 wieder zurück in die Schließstellung gegen die Entleerungsöffnung 27 gedrückt wird und diese durch die Hilfsventildichtung 25 wieder abdichtet. Diese Schließphase mit Antiblockier-Funktion ist in Figur 2c ersichtlich, wo die Hilfsventilbasis 26 noch in der unteren Stellung befindlich ist, die dem betätigten Betätigungsglied 10 entspricht, wohingegen die Hilfsventilbuchse 24 relativ zur Hilfsventilbasis durch Wirkung der Druckfeder 31 nach oben gegen die Entleerungsöffnung 27 in die Schließstellung verschoben ist.

Wird das Betätigungsglied dauerhaft in dieser gedrückten bzw. betätigten unteren Stellung festgelegt, so ist dennoch das Hilfsventil bereits in der Schließstellung und dichtet die Entleerungsöffnung 27 entsprechend ab. Es versteht sich von selbst, dass dann, wenn das Betätigungsglied wieder losgelassen und das Kappenführungsteil 12 wieder durch Wirkung des zweiten Vorspannmittels 11 in die Ausgangsstellung zurückgeschoben wird, auch die Hilfsventilbasis 26 in die obere Position mitgenommen wird und dann Hilfsventilbasis und Hilfsventilbuchse wieder in der zusammen geschobenen Ausgangsposition befindlich sind.

Ein wesentliches Element der vorliegenden Erfindung besteht in der zweiten Gegendruckkammer 30, die das Auseinanderschieben der Hilfsventilbuchse gegenüber der Hilfsventilbasis dadurch verzögert, dass in der zweiten Gegendruckkammer beim Vergrößern des Volumens der zweiten Gegendruckkammer ein Unterdruck entsteht. Dieser Unterdruck wird dadurch langsam abgebaut, dass Wasser von der Gegendruckkammer 20 in den Zwischenraum zwischen Hilfsventilbasis und Hilfsventilbuchse strömt, der ringförmig ausgebildet ist und von einem geschlitzten Kolbenring 32 versperrt wird. Der Kolbenring 32 weist durch seine geschlitzte Unterbrechung eine Befüllungsöffnung 33 auf (die in Figur 2c angedeutet ist und schraubengangförmig verläuft). Durch diese Befüllungsöffnung 33 muss das Wasser von der ersten Gegendruckkammer in die zweite Gegendruckkammer strömen, um auf die Volumenänderung der zweiten Gegendruckkammer reagieren und in das zusätzliche Volumen innerhalb der zweiten Gegendruckkammer 30 nachströmen zu können. Die Größe der Befüllungsöffnung definiert zusammen mit dem Vorspannmittel 31 das Maß der Verzögerung beim Schließen des Hilfsventils.

Die Funktion der Selbstschlussarmatur ist - mit Ausnahme des dynamischen Hilfsventils - so wie bei den bekannten Selbstschlussarmaturen des Standes der Technik. In der in Figur 1 dargestellten Ruhestellung sitzt die Hauptventildichtung 18 fest im Ventilsitz 7 des inneren Gehäuses 6 und verschließt somit die Verbindung des Wasserablaufs 4 mit dem Wasserzulauf 3. Somit steht das Wasser am Zulauf 3 und der Strömungskammer 3.1 bis zum Ventilsitz 7 an und kann nicht zum Strömungsraum 4.1 und zum Ablauf 4 gelangen. In Schließstellung steht innerhalb der Gegendruckkammer 20 der gleiche Druck an wie im Zulauf 3 und dem Strömungsraum 3.1, so dass sich die Gummimembran 19 im Gleichgewichtszustand befindet. Nach Betätigung des Betätigungsglieds 10 durch Herunterdrücken desselben gegen die Wirkung der Feder 11 (also des zweiten Vorspannmittels) bewegt sich das Kappenführungsteil 12 nach unten, so dass die Hilfsventildichtung 25 vom ringförmigen Sitz des Kopfstücks 2 bei der Entleerungsöffnung 27 abhebt und die Gegendruckkammer 20 damit entlastet. Die in der Gegendruckkammer 20 anstehende Flüssigkeit, z. B. Wasser, fließt infolge des von außen auf die Gummimembran 19 wirkenden Druckes der Wasserleitung über dafür vorgesehene Kanäle ab. Die Gummimembran stülpt ein und nimmt dabei den Ventilkörper 16 mit, so dass die Hauptventildichtung 18 von ihrem Sitz 7 abhebt und das Wasser zum Strömungsraum 4.1 und von dort zum Ablauf 4 strömen kann. Durch die Reguliernadel 14 wird der mögliche Hub des Ventilkörpers 16 mit der Gummimembran 19 und der Hauptventildichtung 18 begrenzt. Die Anschlagstellung wird erreicht, wenn das Ende der Reguliernadel 14 an die Sacklochbohrung 21 a anschlägt. Dieser Anschlag der Reguliernadel ist - wie vorstehend bereits geschildert - über die Regulierschraube 15 in seiner Höhe verstellbar, so dass dadurch die gewünschte Hubhöhe der am Ventilkörper 16 befestigten Hauptventildichtung 18 und damit die gewünschte Wassermenge veränderbar ist.

Nach der Betätigung und Loslassen des Betätigungsglieds 10 kehrt die Hilfsventildichtung in ihre Ausgangslage zurück und die Gegendruckkammer 20 kann sich über die Bohrung 21, den Ringraum 22 und die radialen Bohrungen 23 allmählich wieder auffüllen. Durch den sich aufbauenden Druck zusammen mit der Druckdifferenz zwischen Zulauf 3 und Ablauf 4 wird die Hauptventildichtung 18 langsam wieder auf den Sitz 7 bewegt, und schließt nach dem Aufsetzen das Hauptventil ab.

Das Besondere an der vorliegenden Erfindung besteht nun darin, dass die Hilfsventildichtung 25 nicht nur dann wieder in ihre Ausgangslage zurückkehrt, wenn das Betätigungsglied 10 losgelassen wird und das Kappenführungsteil 12 wieder nach oben in die Ausgangsstellung verschoben wird, wodurch die Hilfsventilbasis 26 nach oben mitgenommen und auch die Hilfsventildichtung 25 mitbewegt wird. Sondern selbst wenn das Betätigungsglied und damit das Kappenführungsteil 12 und die Hilfsventilbasis 26 in der unteren Betätigungsstellung verbleiben, sorgt die Druckfeder 31, die sich an der Hilfsventilbasis 26 abstützt und mit ihrem anderen Ende auf die Hilfsventilbuchse 24 einwirkt, dafür, dass die Hilfsventilbuchse 24 mit der Hilfsventildichtung 25 in die Schließstellung gedrückt wird. Hierbei wird das Hilfsventil teleskopiert, das heißt Hilfsventilbasis und Hilfsventilbuchse werden auseinander geschoben, wodurch die zweite Gegendruckkammer 30 in ihrem Volumen vergrößert wird, die erst langsam an dem Kolbenring 32 vorbei durch die Befüllungsöffnung 33 mit Wasser befüllt werden kann. Dieses langsame Befüllen dient als Verzögerungsglied und steuert die Verschlusszeit der Selbstschlussarmatur in dem Fall, dass das Betätigungsglied 10 dauerhaft gedrückt gehalten wird.

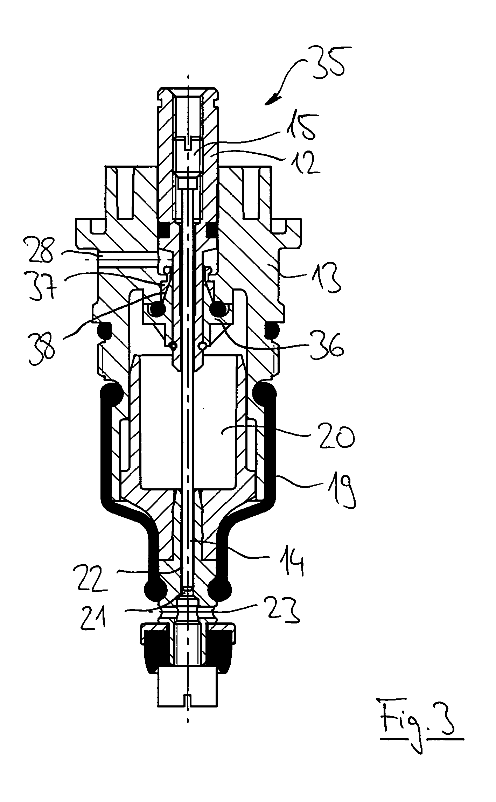

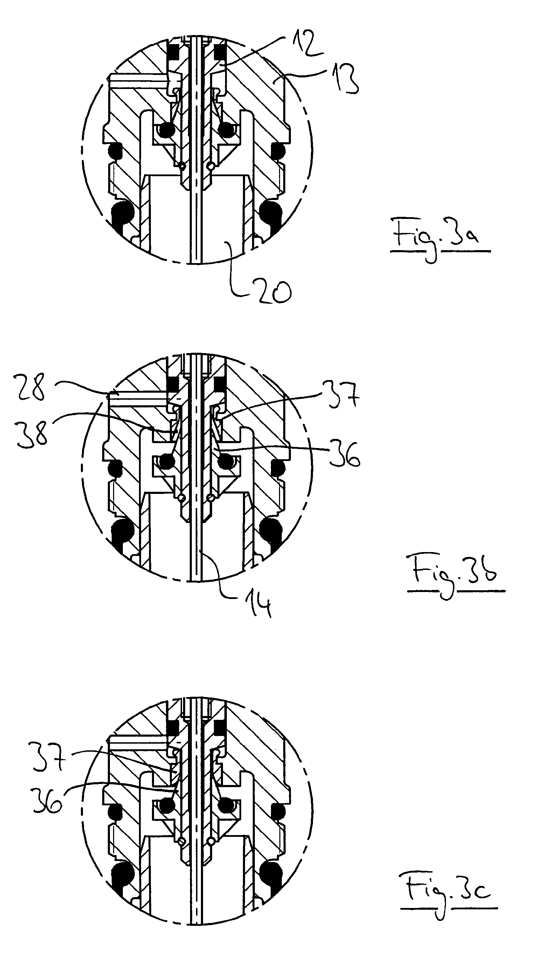

Figuren 3, 3a und 3b zeigen ein zweites Ausführungsbeispiel 35 einer Selbstschlussarmatur, bei dem das Hilfsventil aus einer Hilfsventilbasis 36 und einem Verschlusselement 37 besteht, das eine zwischen der Hilfsventilbasis 36 und Verschlusselement 37 angeordnete Entleerungsöffnung 38 verschließt, wie es in Figur 3a dargestellt ist, die die Ruhephase der Selbstschlussarmatur zeigt. In Figur 3b ist die Öffnungsphase dargestellt, bei der die Hilfsventilbasis 36 zusammen mit dem Kappenführungsteil 12 - entsprechend dem Funktionsprinzip der Ausführungsform aus Figur 2 - nach unten verschoben wird. Hierbei bleibt jedoch das Verschlusselement 37 in einer oberen Stellung und macht dadurch die Entleerungsöffnung 38 frei, wodurch Wasser über die Entleerungsöffnung 38 und die radiale Entleerungsbohrung 28 sowie die Öffnung 29 in den Strömungsraum 4.1 und von dort in den Auslauf 4 fließen kann.

Dadurch dass das Verschlusselement 37 aus einem dauerelastischen Material, in diesem Fall aus einem offenporigen Elastomer besteht, bewegt es die der Entleerungsöffnung 38 zugewandte Seite des Verschlusselements 37 in die Schließstellung, indem es sich in den durch die Öffnungsbewegung frei gewordenen Raum der Entleerungsöffnung 38 selbsttätig ausdehnt. Hierzu muss natürlich das Verschlusselement 37 in der in Figur 3a dargestellten Ruhephase so stark komprimiert sein, dass es nach der Öffnung ausreichend Expansionskraft aufbringt, um sich in den gesamten freigewordenen Bereich der Entleerungsöffnung 38 ausdehnen und hierdurch die Entleerungsöffnung 38 abdichten zu können. Figur 3c zeigt daraufhin die Schließphase mit Antiblockierfunktion, in der das Verschlusselement 37 ausgedehnt und in Schließstellung bewegt ist und die Entleerungsöffnung 23 verschließt.

Die Entleerungsöffnung 38 hat im Ausführungsbeispiel aus Figur 3 eine etwa konische Form. Somit ist unschwer erkennbar, dass ein aus einem dauerelastischen Material bestehendes Vorspannmittel das Verschlusselement des Hilfsventils sowohl über eine verzögerte Längenänderung als auch eine verzögerte Querschnittsänderung in die Schließstellung bewegen kann. Im Ausführungsbeispiel nach Figur 3 besteht das Verschlusselement aus dem Vorspannmittel selbst. Ebenso ist es aber auch möglich, dass das Verschlusselement und das Vorspannmittel aus unterschiedlichen Bauteilen bestehen und somit das Verschlusselement durch das Vorspannmittel in die Schließstellung bewegt wird.

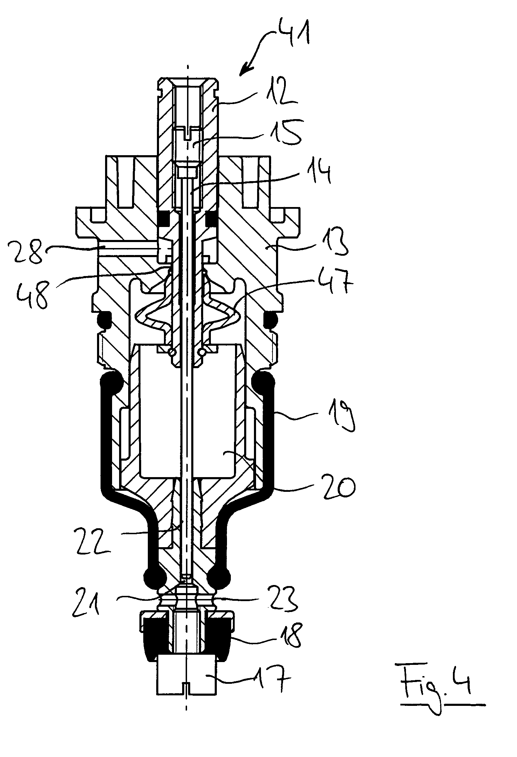

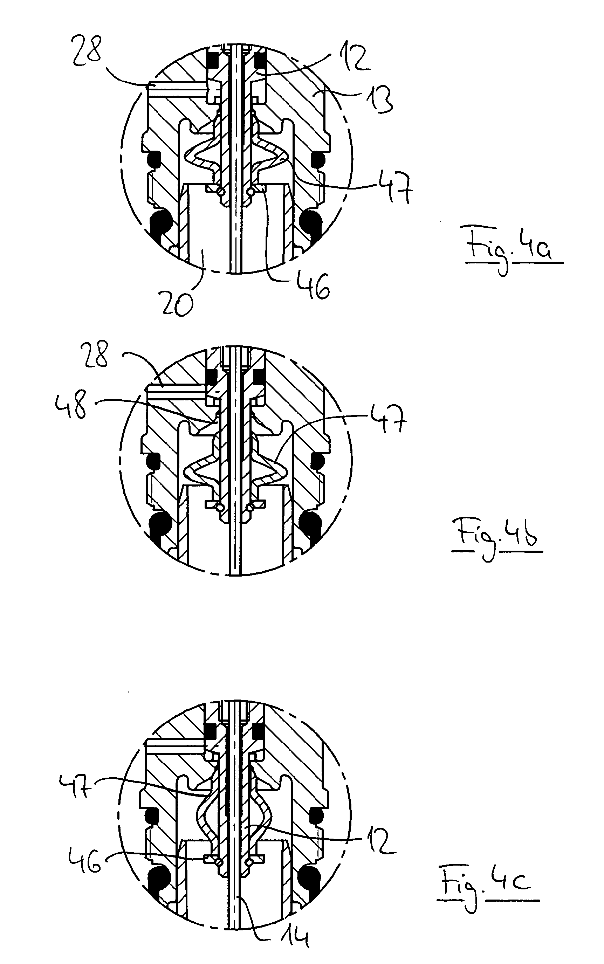

In Figur 4 ist ein drittes Ausführungsbeispiel 41 für die Selbstschlussarmatur der vorliegenden Erfindung gezeigt. Dort ist wiederum das Vorspannmittel aus einem Verschlusselement 47 gebildet, das infolge einer selbsttätigen elastischen Längenänderung von der geöffneten Stellung in die Schließstellung übergeht (siehe Figuren 4b und 4c). Hierbei stützt sich das Verschlusselement 47 an einer Hilfsventilbasis 46 ab, die an dem Kappenführungsteil 12 festgelegt ist. Das Verschlusselement 47 besteht hier aus einem Faltenelastomer, das in der in Figur 4a gezeigten Ruhephase in Axialrichtung gestaucht ist, bei der in Figur 4b gezeigten Öffnungsphase zunächst der Verschiebebewegung der Hilfsventilbasis 46 nach unten folgt und sich dann während der Schließphase gemäß Figur 4c in Axialrichtung streckt und hierdurch eine Entleerungsöffnung 48 verschließt und abdichtet.

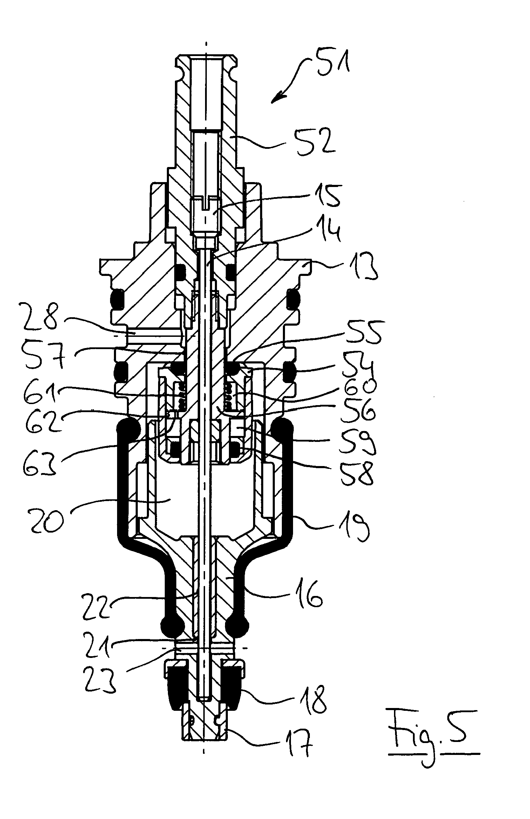

Figur 5 zeigt ein viertes Ausführungsbeispiel 51 einer erfindungsgemäßen Selbstschlussarmatur, bei der das Hilfsventil aus einem in sich geschlossenen Dämpfersystem besteht. Hierzu ist an ein Kappenführungsteil 52 eine Hilfsventilbasis 56 in Axialrichtung fluchtend angeformt. Die Hilfsventilbasis 56 wird auf ihrer Außenseite von einer ringförmigen Hilfsventilbuchse 54 umgeben und bildet zusammen mit der Hilfsventilbasis 56 einen als zweite Gegendruckkammer 60 fungierenden Ringraum, indem auch eine sich zwischen Hilfsventilbasis 56 und Hilfsventilbuchse 54 abstützende und in Axialrichtung wirkende Druckfeder 61 als Vorspannmittel angeordnet ist. Die Hilfsventilbasis 56 weist eine sich in Radialrichtung nach außen erstreckende Membran 62 auf, die eine Befüllungsöffnung 63 aufweist, durch die Wasser in die zweite Gegendruckkammer 60 hinein- bzw. aus dieser hinausströmen kann.

Während also die Druckfeder 61 dafür sorgt, dass die Hilfsventilbuchse 54 mit zugeordneter Hilfsventildichtung 55 in die Schließstellung verschoben wird, wo sie eine Entleerungsöffnung 57 abdichtet, sorgt die Befüllungsöffnung 63 dafür, dass die sich entsprechend der Verschiebebewegung der Hilfsventilbuchse 54 gegenüber der Hilfsventilbasis 56 in ihrem Volumen größer werdende zweite Gegendruckkammer 60 zum Druckausgleich mit Wasser versorgt wird. Indem diese Befüllungsöffnung 63 recht klein gewählt ist, erfolgt der Druckausgleich nur in verzögertem Maße, so dass die Membran mit der Befüllungsöffnung 63 als Verzögerungsglied fungiert.

Wird auf der Außenseite der Hilfsventilbasis 56 noch eine über einen O-Ring 58 abgedichtete Hülse vorgesehen, so kann Dämpfersystem in sich geschlossen ausgebildet werden, wodurch für die zweite Gegendruckkammer 60 ein zweiter Teilbereich 59 entsteht, der über die Befüllungsöffnung 63 in Verbindung mit der zweiten Gegendruckkammer 60 steht, die einen ersten Teilbereich des geschlossenen Systems bildet. Beim Teleskopieren der Hilfsventilbuchse gegenüber der Hilfsventilbasis wird dann die Membran 62 in Richtung des zweiten Teilbereiches 59 verschoben und das dort befindliche flüssige Medium muss über die Befüllungsöffnung 63 in die zweite Gegendruckkammer 60 fließen.

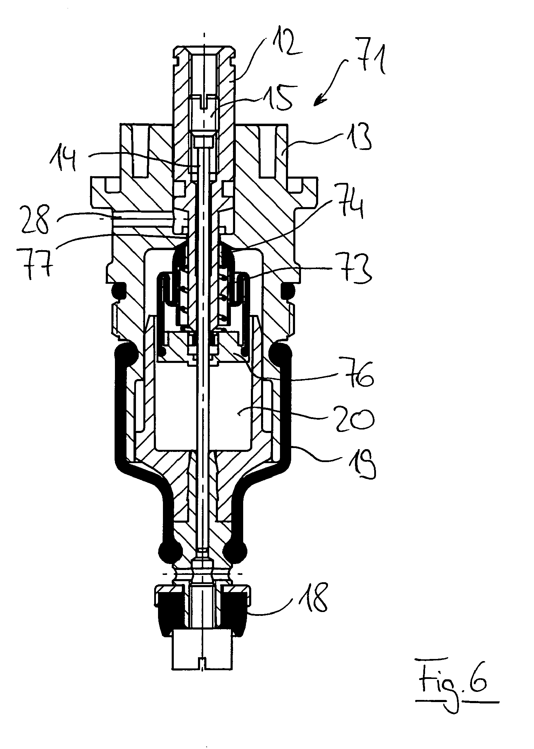

Figur 6 zeigt schließlich noch ein fünftes Ausführungsbeispiel 71 einer Selbstschlussarmatur, bei der eine Hilfsventilbasis 76, ein Vorspannmittel 73 und ein Verschlusselement 74 zusammenwirken. Das Verschlusselement 74 besteht aus einer Gummimembran, die eine Entleerungsöffnung 77 in Schließstellung abdichtet und in Öffnungsstellung freigibt. Das Vorspannmittel 73 ist als Druckfeder ausgebildet und stützt sich zwischen der Hilfsventilbasis 76 (die wiederum mit dem Kappenführungsteil 12 verbunden ist) und dem Verschlusselement 74 wirkend ab, so dass nach einem Betätigen des Betätigungsglieds 10 das Kappenführungsteil 12 nach unten geschoben wird unter Mitnahme der Hilfsventilbasis und des Verschlusselements 74, woraufhin das Vorspannmittel 73 für die Rückstellung des Verschlusselements 74 in die Schließstellung sorgt. Die Gummimembran 74 des Verschlusselements fungiert hierbei gleichzeitig als Verzögerungsglied, indem es aufgrund der eigenen Elastizität die Schließbewegung verlangsamt.

Zusammenfassend bietet die vorliegende Erfindung den Vorteil, ein dynamisches Hilfsventil zur Verfügung zu stellen, das nicht starr an das Betätigungsglied angekoppelt ist und bei betätigtem Betätigungsglied auch die Entleerungsöffnung dauerhaft freigibt, sondern das vielmehr auch im Falle eines dauerhaft gedrückten Betätigungsglieds selbsttätig in die Schließstellung zurückkehrt. Hierfür gibt es verschiedene Wirkprinzipien, insbesondere das oben beschriebene Kolbenprinzip, Membranprinzip und Elastomerprinzip. Allen Prinzipien gemeinsam ist die Tatsache, dass das Hilfsventil eine mit dem Kappenführungsteil verbundene Basis sowie ein gegenüber der Basis bewegbares Verschlusselement aufweist, wobei das Verschlusselement aus einem teleskopierbaren Kolbenelement, einem dauerelastischen Elastomer etc. bestehen kann.

## Patentansprüche

1. Selbstschlussarmatur für sanitäre Anlagen oder dergleichen mit einem Betätigungsglied (10) für den Benutzer, mit einem Hilfsventil (9), das mit dem Betätigungsglied zusammenwirkt und eine hydraulisch über eine Entleerungsöffnung (27, 38, 48, 57, 77) entleerbare Gegendruckkammer (20) aufweist, und mit einem über die Gegendruckkammer betätigbaren Hauptventil (8), wobei die Entleerungsöffnung zumindest mittelbar durch ein Verschlusselement (24, 25, 37, 47, 54, 55, 74) des Hilfsventils verschließbar ist, wobei das Verschlusselement des Hilfsventils durch ein Vorspannmittel (31, 37, 47, 61, 73) in Schließstellung vorgespannt ist und wobei das Verschlusselement des Hilfsventils durch das Betätigungsglied aus der Schließstellung bringbar ist,
**dadurch gekennzeichnet,**
**dass** das Verschlusselement (24, 25, 37, 47, 54, 55, 74) des Hilfsventils (9) und das Betätigungsglied (10) relativ zueinander bewegbar angeordnet sind und dass das Vorspannmittel (31, 37, 47, 61, 73) zwischen dem Verschlusselement des Hilfsventils und dem Betätigungsglied wirkend angeordnet ist und so das Verschlusselement selbst bei betätigt gehaltenem Betätigungsglied wieder in die Schließstellung bewegt.

2. Selbstschlussarmatur nach Anspruch 1,
**dadurch gekennzeichnet,**
**dass** das Vorspannmittel (31, 61, 73) aus einem insbesondere in Axialrichtung wirkenden Federelement besteht.

3. Selbstschlussarmatur nach zumindest einem der vorstehenden Ansprüche,
**dadurch gekennzeichnet,**
**dass** zum verzögerten Schließen des Hilfsventils (9) ein Verzögerungsglied (30, 32, 33, 59, 60, 62, 63, 74) vorgesehen ist, und dass das Verzögerungsglied zum Vorspannmittel (31, 61, 73) parallel geschaltet ist.

4. Selbstschlussarmatur nach zumindest einem der vorstehenden Ansprüche,
**dadurch gekennzeichnet,**
**dass** das Verzögerungsglied (30, 32, 33, 59, 60, 62, 63, 74) eine zweite Gegendruckkammer (30, 59, 60) aufweist mit einer Befüllungsöffnung (33, 63) mit reduziertem voreinstellbarem Öffnungsquerschnitt.

5. Selbstschlussarmatur nach zumindest Anspruch 4,
**dadurch gekennzeichnet,**
**dass** die Befüllungsöffnung (33) einem die zweite Gegendruckkammer (30) aufweisenden teleskopierbaren Kolben (24, 26) zugeordnet ist und dass durch das Bewegen des Kolbens insbesondere in Axialrichtung das Volumen der zweiten Gegendruckkammer veränderbar ist.

6. Selbstschlussarmatur nach zumindest Anspruch 4,
**dadurch gekennzeichnet,**
**dass** die Befüllungsöffnung (63) einer in der zweiten Gegendruckkammer (60) bewegbaren und die zweite Gegendruckkammer in zwei Teilbereiche (59, 60) unterteilenden Membran (62) zugeordnet ist und dass durch das Bewegen der Membran die Größenverhältnisse der beiden Teilbereiche veränderbar ist.

7. Selbstschlussarmatur nach zumindest einem der vorstehenden Ansprüche,
**dadurch gekennzeichnet,**
**dass** das Vorspannmittel (37, 47) aus einem dauerelastischen Material, insbesondere Elastomer, Silikon oder dergleichen besteht.

8. Selbstschlussarmatur nach zumindest Anspruch 7,
**dadurch gekennzeichnet,**
**dass** das aus einem dauerelastischen Material bestehende Vorspannmittel (37, 47) das Verschlusselement (37, 47) des Hilfsventils (9) über eine verzögerte Längenänderung und/oder Querschnittsänderung in die Schließstellung bewegt.

9. Selbstschlussarmatur nach zumindest Anspruch 7 oder 8,
**dadurch gekennzeichnet,**
**dass** das Verschlusselement (37, 47) des Hilfsventils (9) aus dem Vorspannmittel (37, 47) besteht.

10. Selbstschlussarmatur nach zumindest einem der vorstehenden Ansprüche,
**dadurch gekennzeichnet,**
**dass** das Verschlusselement (24, 25, 37, 47, 54, 55, 74) des Hilfsventils (9) und das Betätigungsglied (10) in Schließrichtung voneinander entkoppelbar und in Öffnungsrichtung aneinander gekoppelt sind.

11. Selbstschlussarmatur nach zumindest einem der vorstehenden Ansprüche,
**dadurch gekennzeichnet,**
**dass** das Betätigungsglied (10) fest mit einer Basis (26, 36, 46, 56, 76) des Hilfsventils (9) verbunden ist und dass das Verschlusselement (24, 25, 37, 47, 54, 55, 74) des Hilfsventils (9) relativ zur Basis des Hilfsventils bewegbar ist.

12. Selbstschlussarmatur nach zumindest einem der vorstehenden Ansprüche,
**dadurch gekennzeichnet,**
**dass** das Hauptventil (8) und das Hilfsventil (9) von einen gemeinsamen Gehäuse (2) gehalten und axial hintereinander angeordnet sind.

13. Selbstschlussarmatur nach zumindest Anspruch 12,
**dadurch gekennzeichnet,**
**dass** das Betätigungsglied (10) von einem zweiten Vorspannmittel (11) beaufschlagt ist und dass das zweite Vorspannmittel zwischen Betätigungsmittel und Gehäuse (2) wirkend angeordnet ist.
